# EUROPEAN PATENT APPLICATION

(11) **EP 2 837 609 A1**
(43) Date of publication of application: **18.02.2015**
(21) Application number: 13180059.1
(22) Date of filing: 12.08.2013
(51) Int. Cl.: C04B 28/04

(54) **Ultra-high performance nano-modified concrete composition with borosilicate glass lamp waste powder**

(71) Applicant: Rigas Tehniska Universitate, 1658 Riga (LV)
(72) Inventor: Korjakins, Aleksandrs, LV-1029 Riga (LV); Sahmenko, Genadijs, LV-2015 Jurmala (LV); Bajare, Diana, LV-1004 Riga (LV); Kara, Patricija, LV-1006 Riga (LV); Toropovs, Nikolajs, LV-1082 Riga (LV); Lencis, Uldis, LV-2008 Jurmala (LV)
(74) Representative: Vitina, Maruta

(57) **Abstract**

The present invention relates to the field of ultra-high performance concrete with reduced Portland cement content where Portland cement is partially substituted with borosilicate glass lamp waste powder. Borosilicate glass lamp waste powder is obtained from borosilicate glass lamp waste chips, which are received from a recycling company. The concrete composition comprises, wt.%: CEM 1-type Portland cement - 22.4-25.3 with a minimum compressive strength of 52.5 MPa after 28 days; borosilicate glass lamp waste powder as cement substitute - 3.9-5.9; fine aggregates (sand) - 46.5-49.6; steel fibers - 2.0-2.1; fillers (quartz powder, silica fume and nano-silica) 14.4-15.1; a polycarboxylate-based superplasticising additive - 1.1-1.2; and water - 5.7-5.9.

## Description

The present invention relates to the field of ultra-high performance nano-modified concrete with reduced Portland cement content, where Portland cement is partially substituted with borosilicate glass lamp waste powder. Borosilicate glass lamp waste powder is obtained from borosilicate glass lamp waste chips which are received from a recycling company. The concrete of the present invention is used for the production of thin construction elements, slabs and façade panels.

### Background of the invention

Ultra-high performance concrete (UHPC) is a group of materials which have exceedingly high durability and compressive strength of 126 to 230 MPa and flexural strength of 2 to 50 MPa [1].

There is known high performance concrete with nanodisperse SiO₂ additive which contains cement (wt. %) 25.0-25.6, sand 32.5-33.0, granite siftings with grain size 2.5-5mm, nanodisperse powder Tarkosil-5 0.013-0.052 and water 8.348-9.987 [2].

The disadvantage of this known concrete is the use of granite siftings with large grain size, which worsen the mechanical properties of the high performance concrete.

It is known that glass powder is useful as a substitute for Portland cement in concrete. Production of such glass powder from waste glass is described, for example in [3]. However, it is very difficult to obtain UHPC using glass powder as a partial substitute for Portland cement.

The closest prior art of the present invention is ultra-high performance steel fiber-reinforced concrete, which contains Portland cement at a ratio of 600-800 kg/m³, aggregates at a ratio of 900-1300 kg/m³, steel fibers at a ratio of 150-210 kg/m³, fillers at a ratio of 25-45 kg/m³, including natural calcium carbonate and nano-silica, a polycarboxylate-based superplasticising additive at ratio of 45-55 kg/m³ and water 125-160 kg/m³ [4].

The disadvantage of this known concrete is insufficient compressive strength.

### Technical problem

Technical problem to be solved by the present invention is to provide an ultra-high performance concrete where Portland cement is partially substituted with borosilicate glass lamp waste powder.

### Brief disclosure of the invention

An ultra-high performance concrete composition, according to the invention, comprises, wt. %:
- CEM I-type Portland cement with a minimum compressive strength of 52.5 MPa after 28 days 22.4-25.3;
- borosilicate glass lamp waste powder as Portland cement substitute 3.9-5.9;
- fine aggregates 46.5-49.6;
- steel fibers 2.0-2.1;
- fillers, including quartz powder, silica fume and nano-silica 14.4-15.1;
- a polycarboxylate-based superplasticising additive 1.1-1.2;
- water 5.7-5.9.

Preferably, said borosilicate glass lamp waste powder is of a grain size of 4.9-35.6µm.

Preferably, said quartz powder is of a grain size of 3.4-15.5 µm.

Preferably, said steel fibers have a length of 5-10 mm and a diameter of 0.1-0.2 mm, with a share of 1.5-2% in the overall volume of the concrete.

Preferably, ultra-high performance concrete composition comprises, wt. %:
- CEM I-type Portland cement with a minimum compressive strength of 52.5 MPa after 28 days 22.4-23.6;
- borosilicate glass lamp waste powder as cement substitute 3.9-5.9;
- fine aggregates - sand with grain size 0.3-1 mm 35.6-38.1;
   and sand with grain size 0.063-0.3 mm 10.9-11.5;
- steel fibers 2.0-2.1;
- quartz powder 9.9-10.3;
- silica fume 2.7-2.9;
- nano-silica 1.8-1.9;
- a polycarboxylate-based superplasticising additive 1.1-1.2;
- water 5.7-5.9.

A process for obtaining said ultra-high performance concrete composition comprises following steps:
- grinding of borosilicate glass lamp waste chips into powder for 30 minutes;
- complex grinding-mixing procedure (duration 5 minutes) of Portland cement, borosilicate glass lamp waste powder and silica fume in order to obtain concrete composition;
- addition of fine aggregates, quartz powder, nano-silica, metal fibers and water with a polycarboxylate-based superplasticising additive into the mix composition and mixing.

Experimentally was found concrete composition, which has cement substitution with borosilicate glass lamp waste powder up to 20% and ensures a compressive strength of the obtained concrete equal to the compressive strength of the concrete obtained from the same concrete composition without cement substitution. Borosilicate glass lamp waste powder is obtained from borosilicate glass lamp waste chips which are received from a recycling company. Borosilicate glass lamp waste is not possible to recycle by traditional methods due to its specific chemical composition. It constitutes a problem for glass disposal because glass is not biodegradable and landfill is not environment friendly solution. Similar to many other countries, Latvia is poor with natural pozzolanic materials and only local artificial pozzolans are able to satisfy all demands of the construction industry. It is well known that the use of pozzolans can allow for a 10-20% decrease from the necessary amount of Portland cement in concrete production, which also has a significant cost-saving effect.

The proposed concrete composition contains fillers, including quartz powder, silica fume and nano-silica with various grain size in order to reach improved particle packing. Furthermore, the use of nanostructured additive, which is a nano-silica, promotes plasticity of the concrete composition, shortening of cementation, as well as the workability of the concrete composition mix.

Mixing the concrete composition components in the described order and proportions allows obtain UHPC with the reduced Portland cement content. Complex grinding-mixing procedure helps to enhance activity of binding agents, to improve homogeneity of the concrete composition mix, to increase the density of the concrete composition mix and the compressive strength of hardened concrete.

### Detailed description of a preferred embodiment

Ultra-high performance concrete composition comprises, wt.%:
- CEM I-type Portland cement with a minimum compressive
   strength of 52.5 MPa after 28 days 22.4;
- borosilicate glass lamp waste powder as cement substitute 5.6;
- fine aggregates - sand with grain size 0.3-1 mm 35.6;
   and sand with grain size 0.063-0.3 mm 10.9;
- steel fibers with a length of 6 mm and a diameter of 0.16 mm 2.0;
- quartz powder 9.9;
- silica fume 2.7;
- nano-silica 1.89;
- a polycarboxylate-based superplasticising additive 1.1;
- water 5.7.

Obtaining of present ultra-high performance concrete composition with density 2434 kg/m³ is described for amount of 10 kg. At first 0.56 kg of borosilicate glass waste chips were ground into powder for 30 minutes. Obtained borosilicate glass lamp waste powder with a grain size of 4.9-35.6 µm, 2.24 kg of Portland cement and 0.27 kg of silica fume were treated by complex grinding - mixing procedure (duration 5 minutes). After the addition of 4.56 kg of fine aggregates (sand), 0.99 kg quartz powder, 0.189 kg nano-silica, 0.2 kg of steel fibers and 0.57 kg of water with 0.11 kg a polycarboxylate-based superplasticising additive followed into the concrete composition and all concrete composition components were mixed.

Cubes sample (10x10x10 cm) of the concrete composition were made using steel moulds. The samples were cured in water environment. Compressive strength was determined in accordance with standard LVS EN 12390-3:2009 [5] at the age of 7 and 28 days at normal curing conditions (+20°C), and at the age of 2 day at accelerated curing conditions (in 80°C hot water during 24h). The compressive strength results were in the range of 180-223 MPa.

### References

[1] What is Ultra High Performance Concrete? Online //http://www.cement.org/bridges/ br_uhpc.asp
[2] Patent RU 2471752
   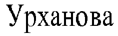 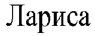 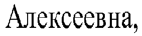 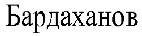 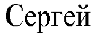 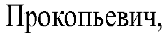 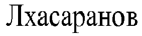 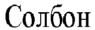 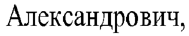 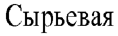 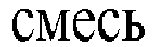 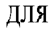 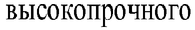 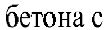 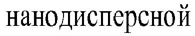 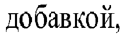 2006.
[3] Patent US7775466 Grasso L.P., Grasso P.S., Kracko E., Andela C. A. Acampora R. J. Production of glass powder from waste glass and productas made using the same, especially concrete, 2010.
[4] Patent EP 2492254A1 Aguado D.C. A, Klein N., Molins B.C., Valls R. Ultra-high-strength concrete reinforced with steel fibers, 2012.
[5] LVS EN 12390-3:2009. Testing of hardened concrete - Part 3: Compressive strength of test specimens. Riga, 2008.

## Claims

1. A ultra-high performance concrete composition comprising, wt.%:
- CEM I-type Portland cement with a minimum compressive strength of 52.5 MPa after 28 days 22.4-25.3;
- borosilicate glass lamp waste powder as cement substitute 3.9-5.9;
- fine aggregates 46.5-49.6;
- steel fibers 2.0-2.1;
- fillers, including quartz powder, silica fume and nano-silica 14.4-15.1;
- a polycarboxylate-based superplasticising additive 1.1-1.2;
- water 5.7-5.9.

2. The composition according to claim 1 wherein said borosilicate glass lamp waste powder is of a grain size of 4.9-35.6 µm.

3. The composition according to claim 1 or 2 wherein said quartz powder is of a grain size of 3.4-15.5 µm.

4. The composition according to any preceding claim wherein said steel fibers have a length of 5-10 mm and a diameter of 0.1-0.2 mm, with a share of 1.5-2% in the overall volume of the concrete.

5. The composition according to any preceding claim comprising, wt.%:
- CEM I-type Portland cement with a minimum compressive strength of 52.5 MPa after 28 days 22.4-23.6;
- borosilicate glass lamp waste powder as cement substitute 5.6-5.9;
- fine aggregates - sand with grain size 0.3-1 mm 35.6-38.1;
and sand with grain size 0.063-0.3 mm 10.9-11.5;
- steel fibers 2.0-2.1;
- quartz powder 9.9-10.3;
- silica fume 2.7-2.9;
- nano-silica 1.8-1.9;
- a polycarboxylate-based superplasticising additive 1.1-1.2;
- water 5.7-5.9.

6. A process for obtaining the ultra-high performance concrete composition according to any of claim 1-5, comprising the following steps:
- grinding borosilicate glass lamp waste chips into powder for 30 minutes;
- complex grinding-mixing procedure of Portland cement, borosilicate glass lamp waste powder and silica fume for 5 minutes;
- adding fine aggregates, quartz powder, nano-silica, steel fibers and water with a polycarboxylate-based superplasticising additive into the mix composition and mixing.
